# EUROPEAN PATENT APPLICATION

(11) **EP 3 020 466 A1**
(43) Date of publication of application: **18.05.2016**
(21) Application number: 14822424.9
(22) Date of filing: 19.06.2014
(51) Int. Cl.: B01D 53/22, B01D 63/08, B01D 71/02, H01G 9/12, H01M 2/12

(54) **VENT MEMBER, VENT-MEMBER PRODUCTION METHOD, AND CONTAINER EXHIBITING VENTING PROPERTIES**

(30) Priority: 09.07.2013 JP 2013143862; 06.03.2014 JP 2014044331
(71) Applicant: Nitto Denko Corporation, Ibaraki-shi, Osaka 567-8680 (JP)
(72) Inventor: ISHII, Kyouko, Ibaraki-shi Osaka 567-8680 (JP); YANO, Yozou, Ibaraki-shi Osaka 567-8680 (JP); FURUUCHI, Kouji, Ibaraki-shi Osaka 567-8680 (JP); FUKUOKA, Takahiro, Ibaraki-shi Osaka 567-8680 (JP); KIRA, Yoshiko, Ibaraki-shi Osaka 567-8680 (JP)
(74) Representative: Müller-Boré & Partner Patentanwälte PartG mbB
(86) International application number: PCT/JP2014/066293
(87) International publication number: WO 2015/005089

(57) **Abstract**

Provided is a ventilation member including: a permeable member that includes a permeable sheet material that selectively allows a certain gas to pass therethrough, and a first frame body that supports a peripheral edge portion of the permeable sheet material; and a protection member that includes a protection sheet material, and a second frame body that supports a peripheral edge portion of the protection sheet material, wherein the permeable member and the protection member are integrally configured by the first frame body and the second frame body coupled to each other, and wherein the protection sheet material is disposed on at least one side of the permeable sheet material.

## Description

### CROSS-REFERENCE TO RELATED APPLICATION

This application claims priority to Japanese Patent Application Nos. 2013-143862 and 2014-044331, the disclosures of which are incorporated herein by reference in its entirety.

### FIELD OF THE INVENTION

The present invention relates to a ventilation member for selectively allowing a certain gas to pass therethrough, a method for producing the ventilation member, and a ventilation container.

### BACKGROUND ART

Conventionally, a pressure adjustment in a container is made by releasing a gas generated in the container to the outside.

For example, in a power storage element such as a secondary battery, an electrolytic condenser, and an electric double layer capacitor, a certain gas is sometimes generated in a container with the electrodes housed therein when in use. Studies have been made to release a gas through a ventilation part formed in the container to the outside in order to suppress pressure increase in the container due to the gas.

For example, Patent Literature 1 teaches that a permeable sheet material made of a porous film such as a polytetrafluoroethylene (PTFE) film is disposed at a ventilation part of a container with the electrodes of a power storage element housed therein.

Patent Literature 2 teaches that a metal foil strip made of nickel, palladium-silver alloy, or platinum, or a metal thin film such as a metal evaporated film formed by vapor depositing platinum on a PTFE film is used as a permeable sheet.

These permeable sheet materials selectively allow a certain gas to pass therethrough, and suppresses pressure increase in, for example, a container of the power storage element by being disposed at a ventilation part of the container and hence allowing a certain gas generated in the container to pass therethrough to the outside of the container, when the certain gas is generated in the container. When the permeable sheet material is disposed at the ventilation part of the container of the power storage element, the electrodes are generally housed in the container, and the electrolyte is filled in the container followed by disposing a permeable sheet at an opening of the ventilation part of the container through a seal member or the like to close the opening.

However, the permeable sheet is a very thin sheet material such as a PTFE film and a metal thin film and therefore is highly likely to be damaged. When impurities or the like adhere on a surface of the permeable sheet material, its gas permeability deteriorates, and therefore the permeable sheet must be treated so as not to be contaminated. Therefore, very troublesome works , such as cutting the permeable sheet material according to the size of the opening of the container, and disposing the permeable sheet material around an opening edge portion of the ventilation part, while preventing the permeable sheet material from being damaged or contaminated, are involved.

Further, as described above, the gas permeability of the permeable sheet material deteriorates when the permeable sheet material is contaminated by impurities adhered thereto. Therefore, when in use, there is a case where a protection sheet material is placed on each of both sides or one side of the permeable sheet material, or is disposed on the permeable sheet material with a certain distance therefrom, or the protection sheet material and the permeable sheet material are overlapped with each other. When such a protection sheet material is used, plural sheet shaped members are necessarily handled, which further requires troublesome works.

Also, once the permeable sheet material and the protection sheet material are overlapped to each other as described above, it is difficult to determine which of the the permeable sheet or the protection sheet has a problem when defective performance has been found. Therefore, there is a demand for individual performance inspections respectively for the permeable sheet material and the protection sheet material before they are overlapped to each other.

### PRIOR ART LETERATURE

### Patent Literature

PATENT LITERATURE 1 WO2009/1947
PATENT LITERATURE 2 JP Pat. No. 4280014

### SUMMARY OF THE INVENTION

### PROBLEMS TO BE SOLVED BY THE INVENTION

In view of the above, an object of the present invention is to provide a ventilation member that can allow the permeable sheet material and the protection sheet material to be subjected to performance inspection independently of each other during production process, and can be easily disposed in a container.

Another object of the present invention is to provide a method for producing a ventilation member that can allow the permeable sheet material and the protection sheet material to be subjected to performance inspection independently of each other during production process, and can be easily disposed in a container.

Still another object of the present invention is to provide a ventilation container that can allow the permeable sheet material and the protection sheet material to be subjected to performance inspection independently of each other during production process, and can allow a ventilation member to be easily disposed in the container.

### MEANS TO SOLVE

According to the present invention, there is provided a ventilation member including: a permeable member that includes a permeable sheet material that selectively allows a certain gas to pass therethrough, and a first frame body that supports a peripheral edge portion of the permeable sheet material; and a protection member that includes a protection sheet material, and a second frame body that supports a peripheral edge portion of the protection sheet material, wherein the permeable member and the protection member are integrally configured by the first frame body and the second frame body coupled to each other, and wherein the protection sheet material is disposed on at least one side of the permeable sheet material.

The ventilation member according to the present invention may include an outer frame body that is disposed outside the permeable member and the protection member.

In the ventilation member according to the present invention, the permeable sheet material may include a hydrogen permeable metal layer that selectively allows hydrogen gas to pass therethrough.

In the ventilation member according to the present invention, the protection sheet material may include a porous film.

The ventilation member according to the present invention may be configured so that a plurality of the protection members are provided, and the permeable members and the plurality of the protection members are integrally configured to have the protection sheet material disposed on each of the both sides of the permeable sheet material.

In the ventilation member according to the present invention, the permeable member may further include an additional protection sheet material that is supported by the first frame body to be disposed on the other side of the permeable sheet material.

In this case, it may be configured so that the permeable member and the protection members are integrally configured to have the protection sheet material of the protection member disposed on one side of the permeable sheet material, and the protection sheet material of the permeable member disposed on the other side of the permeable sheet material.

According to the present invention, there is provided a method for producing a ventilation member including: a permeable member producing step of producing a permeable member by mounting a peripheral edge portion of a permeable sheet material, which selectively allows a certain gas to pass therethrough, to a first frame body; a protection member producing step of producing a protection member by mounting a peripheral edge portion of a protection sheet material to a second frame body; and a mounting step of mounting the permeable member and the protection member integrally with each other by coupling the first frame body and the second frame body to each other, thereby disposing the protection sheet material of the protection member on at least one side of the permeable sheet material.

The method for producing a ventilation member according to the present invention may further include a step of mounting the peripheral edge portion of the protection sheet material to the first frame body to dispose the protection sheet material on the other side of the permeable sheet material in the permeable member producing step.

According to the present invention, there is provided a ventilation container including: the ventilation member; a container body; and a ventilation part that communicates between inside and outside of the container body to enable ventilation, wherein the ventilation member is disposed at the ventilation part to allow the permeable sheet material and the protection sheet material to close a ventilation passage of the ventilation part.

In the ventilation container according to the present invention, the ventilation member may be disposed to have the protection sheet material of the protection member disposed at a position closer to the inside of the container body than the permeable sheet material is.

### BRIEF DESCRIPTION OF THE DRAWINGS

Fig. 1 is a front view of a ventilation member of a present embodiment.
Fig. 1B is a cross sectional view taken along a line A-A.
Fig. 2 is a perspective view, showing a ventilation member, a permeable member, a protection member, and an outer frame body of the present embodiment, and a perspective view showing the ventilation member, the permeable member, the protection member, and the outer frame body in exploded state.
Fig. 3A is a schematic cross sectional view of the permeable member and the protection member.
Fig. 3B is a schematic cross sectional view of the outer frame body.
Fig. 3C is a schematic cross sectional view of the ventilation member.
Fig. 4 is a schematic cross sectional view showing a ventilation container of the present embodiment.
Fig. 5A is a front view of the ventilation member of another embodiment.
Fig. 5B is a cross sectional view taken along a line B-B.
Fig. 6 is a perspective view showing the ventilation member, the permeable member, the protection member, and the outer frame body of another embodiment, and a perspective view showing the ventilation member, the permeable member, the protection member, and the outer frame body in exploded state.
Fig. 7A is a schematic cross sectional view of the permeable member and the protection member.
Fig. 7B is a schematic cross sectional view of the outer frame body.
Fig. 7C is a schematic cross sectional view of the ventilation member.
Fig. 8 is a schematic cross sectional view of the permeable member and the protection member of another embodiment.
Fig. 9A is a schematic cross sectional view of the ventilation member of another embodiment.
Fig. 9B is a schematic cross sectional view of the permeable member of another embodiment.
Fig. 9C is a schematic cross sectional view of the protection member of the permeable member of another embodiment.
Fig. 10A is a schematic cross sectional view of the ventilation member of another embodiment.
Fig. 10B is a schematic cross sectional view of the permeable member of another embodiment.
Fig. 10C is a schematic cross sectional view of the permeable member of the protection member of another embodiment.

### DETAILED DESCRIPTION OF THE PREFERRED EMBODIMENT

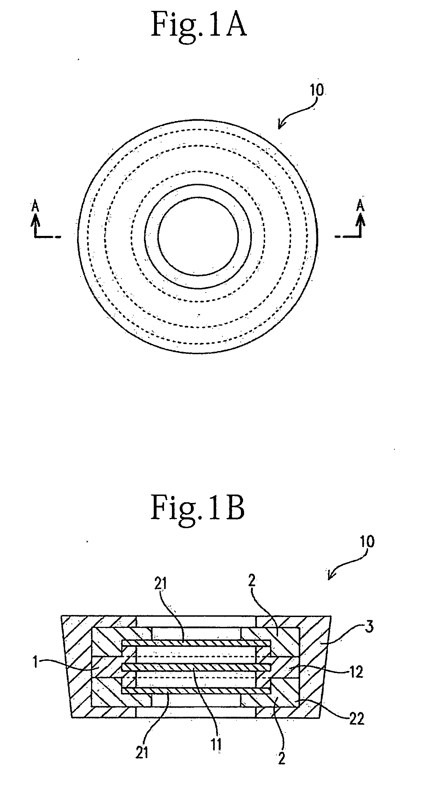

A description is given for an embodiment of the present invention with reference to Fig. 1A to Fig. 10C. In the attached drawings, the same reference numerals are given to the same or corresponding members or parts to eliminate repetition for those parts or members.

### First Embodiment

As shown in Fig. 1A to Fig. 3, a ventilation member 10 of a first embodiment includes: a permeable member 1 that includes a permeable sheet material 11 that selectively allows a certain gas to pass therethrough, and a first frame body 12 that supports a peripheral edge portion of the permeable sheet material 11; and a protection member 2 that includes a protection sheet material 21, and a second frame body 22 that supports a peripheral edge portion of the protection sheet material 21.
a permeable member that includes a permeable sheet material that selectively allows a certain gas to pass therethrough, and a a first frame body that supports a peripheral edge portion of the permeable sheet material, and a protection member that includes a protection sheet material, and a second frame body that supports a peripheral edge portion of the protection sheet material,

The first frame body 12 and the second frame body 22 are integrally configured by the permeable sheet material 11 and the protection members 2 coupled to each other to have the protection sheet material 21 disposed on at least one side of the permeable sheet material 11.

The permeable member 1 includes the permeable sheet material 11 that selectively allows a certain gas to pass therethrough, and the first frame body 12 that surrounds the peripheral edge portion of the permeable sheet material 11 and supports the permeable sheet material 11.

The permeable sheet material 11 is a sheet that selectively allows a certain gas to pass from one side to the other side of the permeable member 1.

Examples of the certain gas include hydrogen, carbon dioxide, and oxygen, although it depends on the intended use of a container in which the ventilation member 10 is disposed.

Examples of the permeable sheet material for selectively allowing a hydrogen gas to pass therethrough include a sheet including a resin such as aromatic polyimide, and a sheet material including a layer made of an oxygen permeable metal, such as vanadium, a vanadium alloy, a palladium alloy, niobium, and a niobium alloy.

Examples of the sheet material including the hydrogen permeable metal layer include a metal foil made of the aforesaid metal, and a sheet provided with a layer of the aforesaid metal formed by, for example, vapor depositing the aforesaid metal onto a substrate layer of a resin sheet or the like.

Examples of the permeable sheet material that selectively allows carbon dioxide to pass therethrough include a silicone rubber, a PVA crosslinked sheet, and a PEG crosslinked sheet.

Among them, a permeable sheet material including a hydrogen-permeable metal layer that selectively allows hydrogen gas to pass therethrough is suitably used as a ventilation member for a power storage element, such as a later-described aluminum electrolytic capacitor, which may cause therein hydrogen gas.

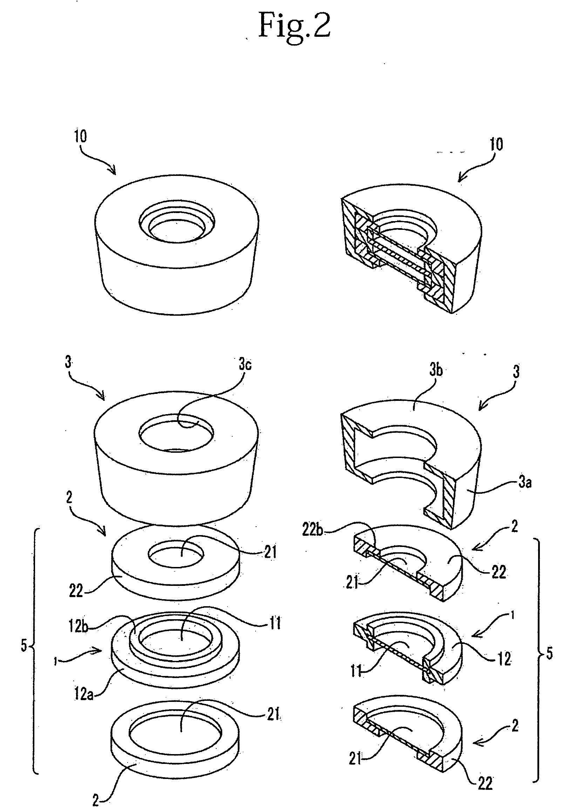

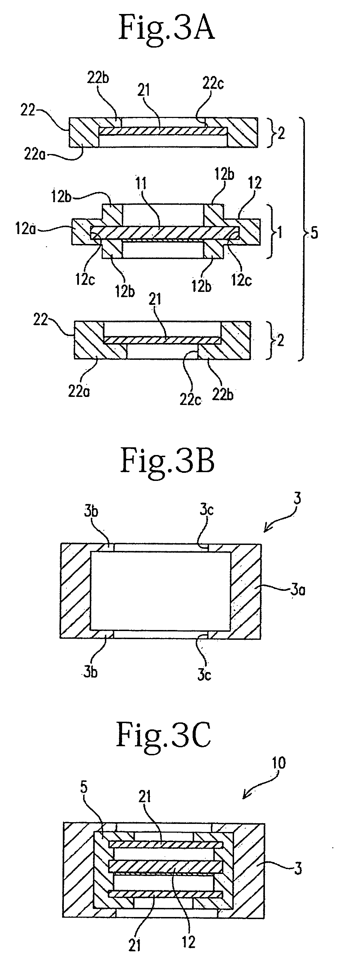

As shown in Fig. 2 and Fig. 3A, the first frame body 12 includes a center portion 12a formed by an annular plate body having an opening at a center thereof, and projection portions 12b that have an annular shape projecting from opening peripheral edges on both sides of the center portion 12a. The center portion 12a has an opening inner peripheral surface forming therein a recess portion 12c into which a peripheral edge portion of the permeable sheet material 11 can be inserted.

Inner peripheral surfaces of the projection portions 12b and the center portion 12a together form a ventilation passage in the first frame body 12 to enable ventilation.

The permeable sheet material 11 having a circular shape as viewed from the top is mounted to the first frame body 12 with its peripheral edge portion inserted into the recess portion 12c of the first frame body 12. At this time, the permeable sheet material 11 is mounted to the first frame body 12 to close the ventilation passage by the permeable sheet material 11.

A material of the first frame body 12 is not necessarily limited to a specific one. Examples of the material include polybutylene terephthalate (PBT), an acrylonitrile butadiene styrene resin (ABS resin), and a thermoplastic resin such as thermoplastic elastomer. A thermoplastic resin is preferable for forming the first frame body 12 because it can be easily formed into a desirable shape.

The protection member 2 includes the protection sheet material 21 having a circular shape as viewed from the top, and the second frame body 22 that surrounds the peripheral edge portion of the protection sheet material 21 and supports the protection sheet material 21.

The ventilation member 10 of the present embodiment includes two protection members 2 having an identical structure, and are disposed respectively on both sides of the permeable sheet material 11 of the permeable member 1.

The protection sheet material 21 is a sheet material that prevents moisture, or contaminated matters such as organic matters, which block gas permeation, from adhering onto the surface of the permeable sheet material 11, and thereby protects the permeable sheet material 11.

Materials of the protection sheet material 21 may be appropriately selected according to the permeable sheet material 11 to be protected. Examples of the material include a porous film or the like formed of polytetrafluoroethylene (PTFE), ceramics, metal, resin or the like.

Among them, a porous film formed of PTFE is preferable as a material of the protection sheet material 21 because it has high water-repellent properties, high heat resistant properties, and high chemical-resistant properties.

The second frame body 22 includes a side wall portion 22a having a tubular shape that opens through its both ends, and a top plate portion 22b that projects from one end of the side wall portion 22a toward the center portion of the opening. The top plate portion 22b has an annular shape as viewed from the top, and has an opening 22c at its center portion to expose the protection sheet material 21 therethrough.

The protection sheet material 21 is housed along the inner peripheral surface of the side wall portion 22a of the second frame body 22, and is retained by the top plate portion 22b so as not to be moved to the outside through one end of the side wall portion 22a.

The peripheral edge portion of the protection sheet material 21 and the inner surface of the top plate portion 22b may be fixed to each other by bonding or welding. In this case, the peripheral edge portion of the opening 22c in the inner surface of the top plate portion 22b acts as a mounting portion for the protection sheet material 21, so that the peripheral edge portion of the protection sheet material 21 is thus mounted to this mounting portion.

The protection sheet material 21 is mounted to the second frame body 22 to expose the center portion of the protection sheet material 21 through the opening 22c of the top plate portion 22b. The second frame body 22 has a ventilation passage defined by the inner peripheral surfaces of the top plate portion 22b and the side wall portion 22a. That is, the protection sheet material 21 is mounted to the second frame body 22 to close the ventilation passage.

The material of the second frame body 22 is not necessarily limited to a specific one, but may be formed by the same material as that of the first frame body 12 of the permeable member 1.

The permeable member 1 and the protection member 2 are integrally configured by the first frame body 12 and the second frame body 22 coupled to each other, so that the protection sheet material 21 of the protection member 2 is disposed on at least one side of the permeable sheet material 11.

The ventilation member 10 of the present embodiment includes a plurality of (two in the present embodiment) protection members 2, and the permeable member 1 and the plurality of the protection members 2 are integrally configured so that the protection sheet materials 21 are disposed respectively on both sides of the permeable sheet material 11.

Specifically, the permeable member 1 and each of the protection members 2 are disposed to have the top plate portion 22b of the second frame body 22 of each of the protection members 2 located outside the permeable member 1, and the projection portion 12b of the first frame body 12 of the permeable member 1 is fitted into the opening of the tubular side wall portion 22a of each of the protection members 2.

The first frame body 12 of the permeable member 1 and the second frame body 22 of the protection member 2 may be mounted to each other only by the aforesaid fitting engagement, or the first frame body 12 and the second frame body 22 may be fixed to each other by adhesive, welding or any other means.

For example, the first frame body 12 and the second frame body 22 may be fixed to each other by bonding or welding the outer peripheral surface of the projection portion 12b of the first frame body 12 to the opening inner peripheral surface of the side wall portion 22a of the second frame body 22.

Thus, a ventilation unit 5 with the permeable member 1 and the protection member 2 integrally configured is formed by the first frame body 12 and the second frame body 22 coupled to each other.

The ventilation unit 5 includes a ventilation passage constituted by a ventilation passage formed by the inner peripheral surfaces of the projection portions 12b and the inner peripheral surface of the center portion 12a of the first frame body 12, and a ventilation passage formed by the top plate portion 22b and the inner peripheral surface of the side wall portion 22a of the second frame body 22.

In the ventilation unit 5, the permeable sheet material 11 and the protection sheet material 21 are disposed to close the ventilation passage.

The ventilation unit 5 may be disposed as the ventilation member 10 at a ventilation part of such a container as described later.

The ventilation member 10 of the present embodiment further includes an outer frame body 3 disposed outside the permeable member 1 and the protection member 2.

Specifically, the ventilation unit 5 is housed inside the outer frame body 3 having a tubular shape, and the permeable member 1 and the protection member 2 of the ventilation unit 5 are integrally mounted in the outer frame body 3.

The outer frame body 3 includes a body portion 3a having a tubular shape with opposite opening ends, and retention members 3b that each project toward a center portion of the opening from each of both ends of the body portion 3a.

As shown in Fig. 1A, Fig. 1B and Fig. 2, the body portion 3a may have a shape with its outer diameter decreasing toward one end thereof, or as shown in Fig. 3A to Fig. 3C, may have a cylindrical shape having a uniform outer diameter.

The retention members 3b each have an annular shape as viewed from the top, and have an opening 3c at its center portion. The opening 3c communicates with the ventilation passage of the ventilation unit 5 and constitutes the ventilation passage of the ventilation member 10.

The material of the outer frame body 3 is not necessarily limited to a specific one. Examples thereof include rubber such as silicone rubber, and ethylene propylene diene rubber (EPDM). These rubbers are preferable because they have a relatively high flexibility and elasticity.

As described above, according to the ventilation member 10 of the present embodiment, in the ventilation passage, the protection sheet material 21, the permeable sheet material 11 and the protection sheet material 21 are disposed in this order from outside of the ventilation member 10 so that a gas passing in the ventilation passage reaches the respective sheet materials in this order.

That is, regardless of whether gas enters through the opening 3c on one side or the other side of the outer frame body 3, gas reaches the permeable sheet material 11 through the protection sheet material 21. Accordingly, there is a low risk that a surface of the permeable sheet material is contaminated.

Next, the description is given for a method for producing the ventilation member 10.

A method for producing the ventilation member according to the present embodiment includes: a permeable member producing step of producing the permeable member 1 by mounting the peripheral edge portion of the permeable sheet material 11, which selectively allows a certain gas to pass therethrough, to the first frame body 12; a protection member producing step of producing the protection member 2 by mounting the peripheral edge portion of the protection sheet material 21 to the second frame body 22; and a mounting step of mounting the permeable member 1 and the protection member 2 integrally with each other by coupling the first frame body 12 and the second frame body 22 to each other, thereby disposing the protection sheet material 21 of the protection member 2 on at least one side of the permeable sheet material 11.

In the present embodiment, the permeable member producing step is first carried out.

The permeable sheet material 11 having a circular shape as viewed from the top, as described above, is prepared, and then, the first frame body 12 as described above is molded integrally with the permeable sheet material 11 by insert molding or the like, thereby producing the permeable member 1.

Alternatively, the permeable member 1 may be produced by inserting the peripheral edge portion of the permeable sheet material 11 into the recess portion 12c of the first frame body 12 which has been formed into the shape as described above.

Next, the protection member producing step is carried out.

The permeable sheet producing step and the protection member producing step may be carried out simultaneously with each other, or any one of the steps may be carried out subsequent to the remaining step.

In the protection member producing step, the protection sheet material 21 having a circular shape as viewed from the top, as described above, is prepared, and then, the protection sheet material 21 is housed along the inner peripheral surface of the second frame body 22 having the shape as described above. The inner surface side of the top plate portion 22b and the peripheral edge portion on the one side of the protection sheet material 21 may be fixed to each other by bonding or welding.

Thus, the protection member 2 as described above is produced.

In the method for producing the ventilation member 10 according to the present embodiment, an inspection step of inspecting the permeable sheet material and the protection sheet material after the permeable member 1 and the protection member 2 have been produced and before the mounting step of mounting them integrally with each other is carried out.

For example, the permeable sheet material may be subjected to a test regarding the permeability to find presence or absence of a pin hole, or find adhesion state of contaminants, or the like.

The protection sheet material may be subjected to a test regarding the protection performance such as a hydraulic pressure resistance test.

In the method for producing the ventilation member according to the present embodiment, a permeable member and a protection member are produced separately from each other before production of the ventilation member is completed, since the permeable member producing step, and the protection member producing step are respectively carried out. Therefore, the quality of each of the permeable sheet material and the protection sheet material can be inspected as the sate of each of the individual members, and therefore production inspection can be easily carried out in the production step.

Thus, according to the quality inspection carried out for each of the permeable sheet material and the protection sheet material before they have been fabricated into the ventilation member, when any one of the permeable sheet material and the protection sheet material is defective, the ventilation member can be produced by replacing only the defective member with a new one.

Next, the mounting step of mounting the permeable member and the protection member integrally with each other by coupling the first frame body and the second frame body to each other, thereby disposing the protection sheet material on at least one side of the permeable sheet material is carried out.

The projection portion 12b of the first frame body 12 of the permeable member 1 is fitted into the opening of the tubular side wall portion 22a of the protection member 2. In the present embodiment, two protection members 2 are disposed so that the protection sheet materials 21 are disposed respectively on both sides of the permeable sheet material 11.

Each protection sheet material 21 can be fixed in position by disposing the peripheral edge portion of the protection sheet material 21 of the protection member 2 to be sandwiched between a leading end surface of the projection portion 12b of the first frame body 12 of the permeable member 1 and the inner surface of the top plate portion 22b of the protection member 2.

Alternatively, the protection sheet material 21 may be fixed in position by bonding or welding together the peripheral edge portion of the protection sheet material 21 of the protection member 2 and the leading end surface of the projection portion 12b of the first frame body 12.

In the method for producing the ventilation member according to the present embodiment, an outer frame mounting step of mounting the t outer frame body 3 having the configuration as described above on the outside of the permeable member 1 and the protection member 2 (ventilation unit 5) which have been integrated with each other by the mounting step may be additionally carried out.

As a method for mounting the outer frame body 3 and the ventilation unit 5 to each other, the ventilation unit 5 is pressed into the outer frame body 3 through any one of the upper opening and the lower opening of the outer frame body 3, for example.

For the outer frame body 3 having flexibility and elasticity, when the ventilation unit 5 is to be housed in the outer frame body 3, the opening of the retention member 3b is expanded and then the ventilation unit 5 is inserted therethrough. After the insertion , the retention member 3b is restored to its original shape so that the ventilation unit 5 can be securely retained.

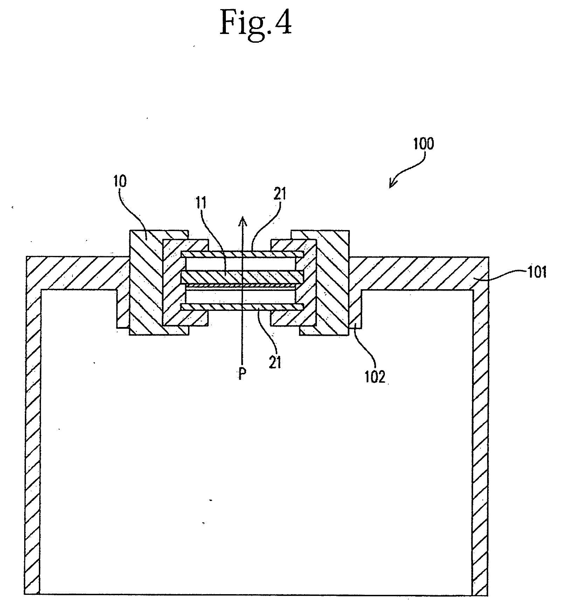

Next, a description is given for a ventilation member of the present embodiment.
As shown in Fig. 4, a ventilation container 100 of the present embodiment includes the aforesaid ventilation member 10, a container body 101, and a ventilation part 102 that communicates between inside and outside of the container body 101 to enable ventilation. The ventilation member 10 is disposed at the ventilation part 102 to allow the permeable sheet material 11 and the protection sheet materials 21 to close the ventilation passage of the ventilation part 102.

Examples of the container body of the ventilation container of the present embodiment include a container that houses the electrodes of a power storage element, such as a secondary battery, an electrolytic capacitor such as an aluminum electrolytic capacitor, and an electric double layer capacitor.

For example, hydrogen gas is sometimes generated in an aluminum electrolytic capacitor during use, and carbon dioxide gas is sometimes generated in an electric double layer capacitor during use. When such a gas is accumulated in the container body and thereby causes increase in inner pressure, it may cause a problem such as deformation of the container body.

The ventilation container 100 of the present embodiment includes a ventilating part 102 that communicates between inside and outside of the container body 101.

The ventilation part 102 is formed, for example, by forming an opening at a portion of the container body with the electrodes and the electrolyte housed therein to communicate between inside and outside of the container body.

The ventilation member 10 described above is mounted to the ventilation part.

For example, the ventilation member 10 is inserted into the opening of the ventilation part 102 and the permeable sheet material 11 of the ventilation member 10 is disposed to close a ventilation passage P of the ventilation part 102.

The ventilation member 10 is mounted so that the protection sheet material 21 is disposed more inward in the container body than the permeable sheet material 11.

In the ventilation container 100 of the present embodiment, the protection sheet material 21 of the protection member 2 is disposed on each of both sides of the permeable sheet material 11 so that the protection sheet materials 21 are respectively disposed more inward and more outward in the container body 101 than the permeable sheet material 11.

That is, gas passes through the one protection sheet material 21, the permeable sheet material 11 and the other protection sheet material 21 in this order in the ventilation passage P of the ventilating part 102.

Disposition of the protection sheet materials 21 on both sides of the permeable sheet material 11 produces an advantageous effect as mentioned below.

That is, for example, for the power storage element of which a ventilation container has the container body 101 with the electrolyte housed therein, the protection sheet material 21 disposed inward in the container body 101 suppresses the gas permeability from deteriorating due to the electrolyte adhered to the permeable sheet material 11.

Further, the protection sheet material 21 disposed outward in the container body 101 suppresses the gas permeability from deteriorating due to contaminants such as dusts coming from the outside and adhered to the permeable sheet material 11.

When the ventilation member 10 of the present embodiment is to be mounted to the container body, it can be disposed in the container body without the necessity to directly process or directly touch the permeable sheet material 11, the protection sheet materials 21 or the like, since the permeable sheet material 11 and the protection sheet materials 21 are integrated with each other as the ventilation unit 5.

Thus, it is possible to easily dispose the ventilation member 10 in the container body without damaging the permeable sheet material 11 or the protection sheet materials 21, or causing contaminants to adhere thereto.

### Second Embodiment

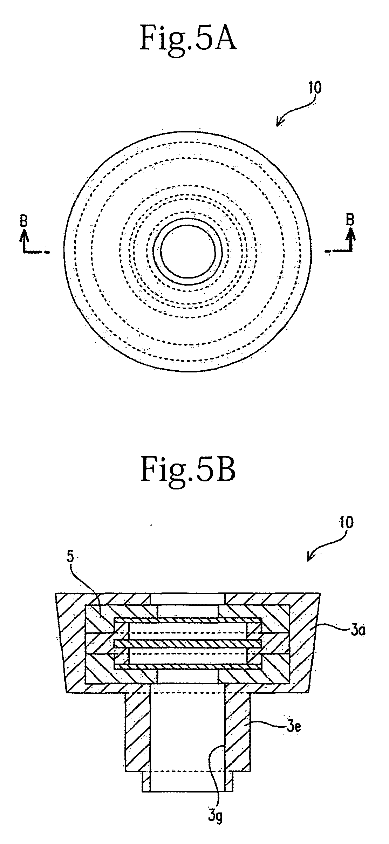

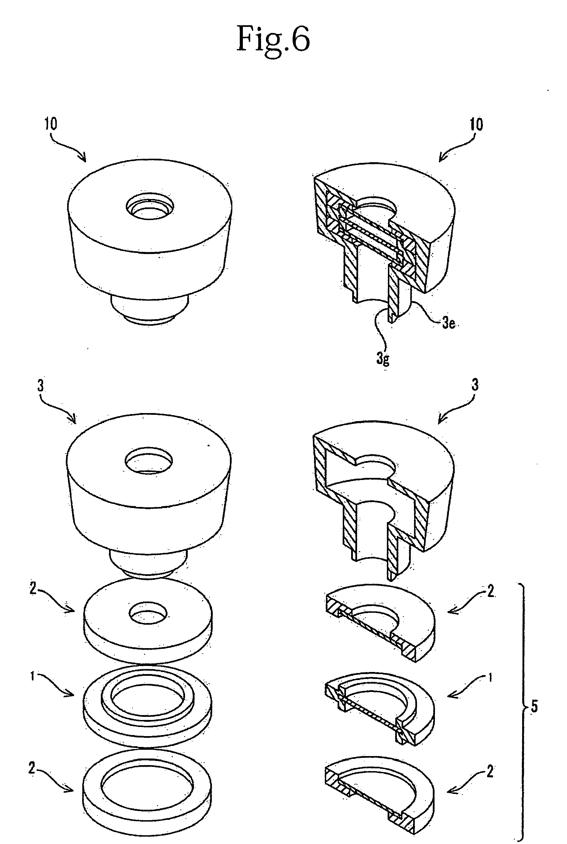

The ventilation member of the second embodiment as a modified example 1 of the first embodiment is shown in Figs. 5A and 5B, and Fig. 6.

The ventilation member 10 of the present embodiment has basically the same configuration as that of the ventilation member 10 of the first embodiment, except that one end side of the tubular body portion 3a of the outer frame body 3 is provided with an insertion portion 3e having a tubular shape with an outer diameter smaller than the body portion 3a.

The outer frame body 3 of the present embodiment has a ventilation hole 3g that is provided on the inner side of the insertion portion 3e to enable ventilation, and the ventilation hole 3g communicates with the ventilation passage of the ventilation unit 5 that is housed inside the outer frame body 3.

According to the ventilation member 10 of the present embodiment provided with the insertion portion 3e, when the ventilation member 10 is to be disposed in the opening of the ventilation part of the container body 101, the insertion portion 3e is inserted into the opening of the ventilation part, which enables the body portion 3a to tightly contact the outer surface around the opening.

### Third Embodiment

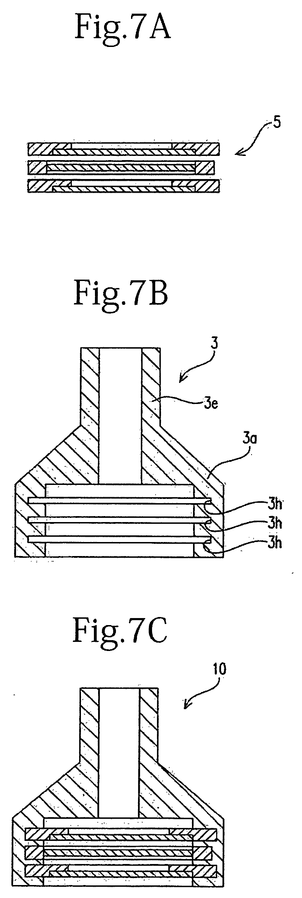

The ventilation member 10 of the third embodiment as a modified example 2 of the first embodiment is shown in Figs. 7A to 7C.

In the ventilation member 10 of the third embodiment, the one end side of the tubular body portion 3a is provided with the insertion portion 3e having a tubular shape with an outer diameter smaller than the body portion 3a.

Recess portions 3h are formed at three places in the inner peripheral surface of the tubular body portion 3a.

In the ventilation member 10 of the present embodiment, the first frame body 12 of the permeable member 1 is not provided with the projection portions 12b, and the permeable member 1 and the protection members 2 are mounted integrally with each other by inserting the first frame body 12 and the second frame bodies 22 into the recess portions 3h of the outer frame body 3.

That is, the integral configuration of the permeable member 1 and the protection member 2 is achieved by coupling the first frame body 12 and the second frame body 22 to each other via the outer frame body 3.

### Forth Embodiment

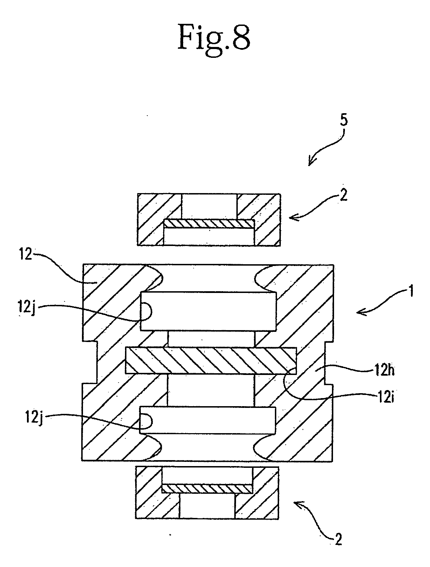

The ventilation member 10 of the fourth embodiment as a modified example 3 of the first embodiment is shown in Fig. 8.

The protection members 2 of the ventilation member 10 of the fourth embodiment have basically the same configuration as that of the protection members 2 of the first embodiment, but the first frame body 12 of the permeable member 1 is configured to be engageable with the permeable sheet material 11 and the protection members 2.

That is, as shown in Fig. 8, the first frame body 12 of the permeable member 1 of the fourth embodiment includes a frame body 12h having a tubular shape, and has a recess portion 12i into which the peripheral edge portion of the permeable sheet material 11 is inserted, and protection-member recesses 12j for housing the protection members 2.

The recess portion 12i is formed in the inner peripheral surface of a substantially center portion in the length direction of the tubular frame body 12h, and the protection-member recesses 12j are respectively formed on both end sides of the frame body 12h with the recess portion 12i therebetween.

According to the ventilation member 10 of the present embodiment, the protection members 2 are respectively fitted into the protection-member recesses 12j of the first frame body 12 of the permeable member 1 and thereby are mounted thereto, so that the permeable member 1 and the protection sheet materials 21 are mounted integrally with each other to have the protection sheet material 21 disposed on at least one side of the permeable sheet material 11.

### Fifth Embodiment

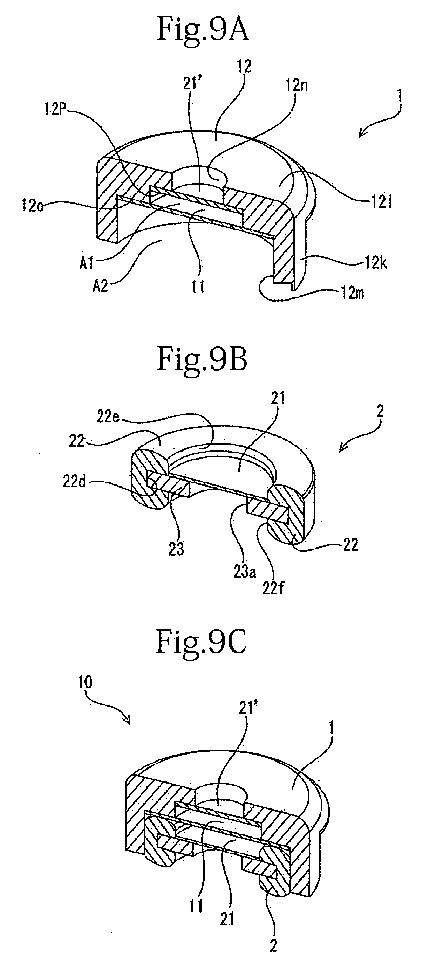

The ventilation member 10 according to the fifth embodiment is shown in Fig. 9A to Fig. 9C.

The ventilation member of the present embodiment includes: the permeable member 1 that includes the permeable sheet material 11 that selectively allows a certain gas to pass therethrough, and the first frame body 12 that supports the permeable sheet material 11 along the peripheral edge portion of the permeable sheet material 11; and the protection member 2 that includes the protection sheet material 21, and the second frame body 22 that supports the protection sheet materials21 along the peripheral edge portion of the protection sheet material 21, wherein the permeable member 1 and the protection member 2 are integrally configured by the first frame body 12 and the second frame body 22 coupled to each other, so that the protection sheet material 21 of the protection member 2 is disposed on at least one side of the permeable sheet material 11. The permeable member 1 includes an additional protection sheet material 21' that is supported by the first frame body 12 to be disposed on the other side of the permeable sheet material 11.

In the present embodiment, the permeable member 1 includes the first frame body 12, to which the permeable sheet material 11 and the protection sheet material 21' that protects the permeable sheet material 11 are mounted.

The first frame body 12 includes a side wall portion 12k having a tubular shape, and a top plate portion 121 that is disposed on one end side of the side wall portion 12k. The side wall portion 12k has an opening 12m on its other end side.

The top plate portion 121 has an annular shape as viewed from the top, and has an opening 12n at its center portion, which opening 12n communicates with the inside of the side wall portion 12k. That is, the ventilation passage through which gas passes along the axis direction of the side wall portion 12k is formed by the opening 12n of the top plate portion 121, the inner peripheral surface of the side wall portion 12k, and the opening 12m on the other side of the side wall portion 12k.

The ventilation passage is formed to have a cross sectional shape orthogonal to the axis direction (circulation direction of gas flowing inside) being stepwisely increased from the one end side (the top plate portion 121 side) toward the other end side (the opening 12m side).

In the present embodiment, the ventilation passage is constituted by a first area A1 that is formed on the one end side, and a second area A2 that is formed closer to the other end side than the first area A1 is, and has a cross sectional shape larger than the first area A1.

The first frame body 12 of the present embodiment includes a permeable sheet mounting portion 12o on the inside of the side wall portion 12k.

The permeable sheet mounting portion 12o has an annular shape extending from the inner peripheral surface of the side wall portion 12k toward a center portion of the ventilation passage.

The permeable sheet material 11 has its peripheral edge portion mounted to the permeable sheet mounting portion 12o.

The first frame body 12 includes a protection sheet mounting portion 12p around a peripheral edge portion of the opening 12n of the inside (an area surrounded by the side wall portion 12k and the top plate portion 121) of the top plate portion 121.

The protection sheet material 21' has its peripheral edge portion mounted to the protection sheet mounting portion 12p.

That is, the protection sheet material 21' is provided to the first frame body 12 to have the protection sheet material 21' exposed to the outside of the first frame body 12 through the opening 12n of the top plate portion 121.

Further, the permeable sheet mounting portion 12o is formed between the first area A1 and the second area A2 of the ventilation passage, and is formed to couple an end portion on the second area A2 side of the first area A1 to an end portion on the first area A1 side of the second area A2. That is, the ventilation passage is partitioned into the first area A1 and the second area A2 by the permeable sheet material 11.

Means for mounting the permeable sheet mounting portion 12o and the permeable sheet material 11, and mounting the protection sheet mounting portion 12p and the protection sheet material 21' is not necessarily limited to a specific one. Examples of such means include adhesive, adhesive sheet material, welding or other various means.

In the present embodiment, the protection member 2 includes a second frame body 22 having a tubular shape, a protection sheet material 21 that has a peripheral edge portion supported by the second frame body 22, and a fixing plate 23 that is placed on one side of the protection sheet material 21 and has a peripheral edge portion supported along with the protection sheet material 21 by the second frame body 22.

A recess portion 22d is formed in an inner peripheral surface of the second frame body 22 in the circumferential direction, and the peripheral edge portions of the protection sheet material 21 and the fixing plate 23 are inserted into the recess portion 22d. Whereby, the protection sheet material 21 and the fixing plate 23 placed on each other are mounted to the second frame body 22.

That is, the one side of the protection sheet material 21 is exposed through the opening 23a of the fixing plate 23 and the opening 22e on one end side of the second frame body 22, and the other side of the protection sheet material 21 is exposed through the opening 22f on the other end side of the second frame body 22 and the opening 23a of the fixing plate 23.

That is, in the protection member 2, the ventilation passage is formed by the opening of the second frame body 22 and the opening of the fixing plate 23.

The material of the second frame body 22 of the present embodiment is not necessarily limited to a specific one, but an elastic material such as silicone rubber and EPDM is preferable because it exhibits a good sealability to the permeable member 1.

According to the ventilation member 10 of the present embodiment, the second frame body 22 is fitted into the second area A2 of the first frame body 12 so that they are mounted integrally with each other.

Specifically, the second frame body 22 is inserted through the other opening 12m of the first frame body 12 and fitted into the first frame body 12. At this time, the second frame body 22 is disposed to have the fixing plate 23 of the second frame body 22 disposed outside. That is, the second area A2 of the first frame body 12 is partitioned by the protection sheet material 21 of the second frame body 22.

According to the ventilation member of the present embodiment, the ventilation passage is formed by the opening 12n of the top plate portion 121 of the first frame body 12, the first area A1, the second area A2, the opening 23a of the fixing plate 23, and the openings 22e and 22f of the second frame body.

The permeable sheet material 11, and the protection sheet materials 21 and 21' are disposed to close the ventilation passage.

According to the ventilation member 10 of the present embodiment, both sides of the permeable sheet material 11 are protected by the protection sheet materials 21 and 21'. Since the protection sheet material 21' for protecting the one side of the permeable sheet material 11 is supported along with the permeable sheet material 11 by the first frame body 12, only the one protection member 2 is required to be provided, and thus a number of parts of the ventilation member 10 can be decreased.

According to the ventilation member 10 of the present embodiment, the protection sheet material 21' mounted to the first frame body 12 is mounted to the same frame body as that of the permeable sheet material 11, that is, to the first frame body 12. Therefore, the permeable sheet material 11 and the protection sheet material 21' cannot be inspected independently of each other before they are fabricated into the ventilation member 10. However, the protection sheet material 21 mounted to the second frame body 22 can be inspected independently of the inspection of the permeable sheet material 11.

The method for producing the ventilation member of the present embodiment further includes a step of mounting the peripheral edge portion of the protection sheet material 21 to the first frame body 12 to dispose the protection sheet material 21 on the other side of the permeable sheet material 11 in the permeable member producing step of the producing method of the first embodiment.

When the ventilation member 10 of the present embodiment is to be disposed at the ventilation part of the ventilation container, it is preferable that the ventilation member 10 be disposed at the ventilation part so that the side of the ventilation member 10, to which the second frame body 22 has been fitted, is located on the side close to the inside of the container body.

In this case, the protection sheet material 21 of the second frame body 22 is disposed on the side close to the inside of the container body. For example, when the ventilation container is a container such as a battery or a capacitor, the inside of which is filled with the electrolyte, it is required to more securely prevent contamination of the permeable sheet material 11 from the inside of the container body due to the electrolyte or the like.

Even in this case, the protection sheet material 21 of the second frame body 22 can be inspected independently of the inspection of the permeable sheet material 11, and therefore it is possible to securely check the function of the protection sheet material.

### Sixth Embodiment

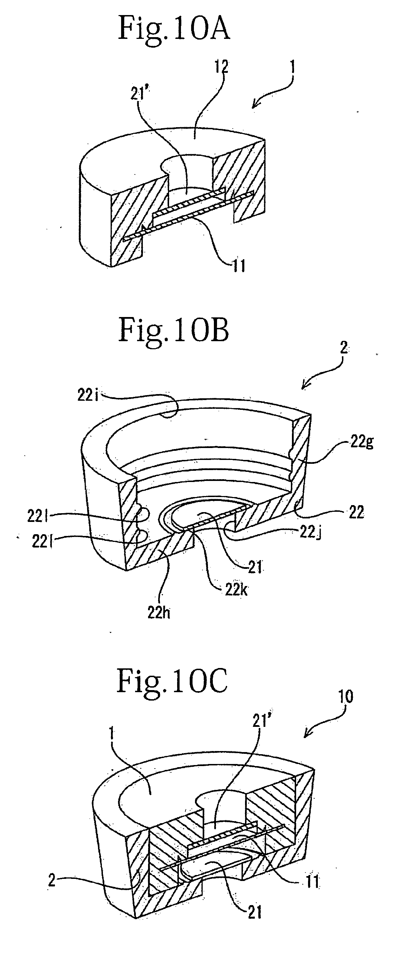

The sixth embodiment as a modified example of the fifth embodiment is shown in Figs. 10A to 10C.

The configuration of the first frame body 12 of the present modified example is the same as that of the first frame body 12 of the aforesaid embodiment.

The second frame body 22 of the present modified example includes a side wall portion 22g having a tubular shape, and a top plate portion 22h that is disposed on one end side of the side wall portion 22g. An opening 22i is formed at the other end side of the side wall portion 22g. An opening 22j is formed at a center portion of the top plate portion 22h.

The second frame body 22 includes a protection sheet mounting portion 22k along a peripheral edge portion of an opening on the inside of the top plate portion 22h (area surrounded by the side wall portion 22g and the top plate portion 22h). A peripheral edge portion of the protection sheet material 21 is mounted to the protection sheet mounting portion 22k.

A projection portion 221 is formed on an inner peripheral surface of the side wall portion 22g in the circumferential direction. In the present embodiment, two projection portions 221 are formed at two places on the inner peripheral surface of the side wall portion 22g.

In the ventilation member 10 of the present embodiment, the first frame body 12 and the second frame body 22 are mounted integrally with each other by fitting the first frame body 12 into the inside of the side wall portion 22g of the second frame body 22.

That is, the protection sheet materials 21 and 21' are disposed on both sides of the permeable sheet material 11 by inserting the first frame body 12 from its side, on which the permeable sheet material 11 is disposed, into the opening 22i on the other end of the second frame body 22.

The ventilation member, the method for producing the ventilation member and the ventilation container according to the first to sixth embodiments are configured as described above, but the embodiments disclosed herein should be construed in all respects as illustrative but not limiting. The scope of the present invention is not indicated by the foregoing description but by the scope of the claims. The scope of the present invention is intended to include all the modifications equivalent in the sense and the scope to the scope of the claims.

The ventilation member according to the present invention as described above includes a permeable member that includes a permeable sheet material that selectively allows a certain gas to pass therethrough and a first frame body that supports a peripheral edge portion of the permeable sheet material, and a protection member that includes a protection sheet material and a second frame body that supports a peripheral edge portion of the protection sheet material, wherein the permeable member and the protection member are integrally configured by the first frame body and the second frame body coupled to each other, and wherein the protection sheet material is disposed on at least one side of the permeable sheet material.

According to the present invention, the ventilation member includes a permeable member that includes: a permeable sheet material that selectively allows a certain gas to pass therethrough, and a first frame body that supports a peripheral edge portion of the permeable sheet material; and a protection member that includes a protection sheet material, and a second frame body that supports a peripheral edge portion of the protection sheet material, wherein the permeable member and the protection member are integrally configured by the first frame body and the second frame body coupled to each other, and wherein the protection sheet material is disposed on at least one side of the permeable sheet material. With this configuration, when the ventilation member is disposed in a container or the like, the permeable sheet material and the protection sheet material can be simultaneously disposed in the container or the like. Since the permeable sheet material and the protection sheet material are supported by the separate frame bodies, that is, the first frame body and the second frame body, the ventilation member can be disposed in the container by holding the first frame body and the second frame body by hand, which eliminates the necessity of directly touching the permeable sheet material and the protection sheet material. That is, the ventilation member can be easily disposed in the container or the like while preventing damages to or adhesion of contaminants to the permeable sheet material and the protection sheet material. Further, since the permeable sheet material and the protection sheet material are supported respectively by the first frame body and the second frame body, the permeable sheet material and the protection sheet material can be easily inspected independently of each other before they are fabricated into the ventilation member.

The ventilation member according to the present invention may include an outer frame body that is disposed outside the permeable member and the protection member.

When the outer frame body to be disposed outside the frame bodies of the permeable member and the protection member is provided, the shape of the outer frame body is changed to be adapted to the shape of a place to which the ventilation member is disposed, so that the ventilation member can have a shape adapted to the shape of the disposing place of the ventilation member without changing the shapes of the permeable member and the protection member.

In the ventilation member according to the present invention, the permeable sheet material may include a hydrogen permeable metal layer that selectively allows hydrogen gas to pass therethrough.

In this case, the ventilation member that can selectively allow hydrogen gas to pass therethrough and effectively suppress increase in pressure due to generation of hydrogen gas.

In the ventilation member according to the present invention, the protection sheet material may include a porous film.

In this case, contaminated matters are absorbed into the porous film so that contamination of the permeable sheet material can be more effectively prevented.

The ventilation member according to the present invention may be configured so that a plurality of the protection members are provided, and the permeable member and the plurality of the protection members are integrally configured to have the protection sheet materials disposed respectively on both sides of the permeable sheet material.

In this case, contamination of the permeable sheet material can be more securely prevented.

In the ventilation member according to the present invention, the permeable member may include an additional protection sheet material that is supported by the first frame body to be disposed on the other side of the permeable sheet material. (Claim 6)

In this case, contamination of the permeable sheet material can be more securely prevented.

In this case, it may be configured so that the permeable member and the protection members are integrally configured to have the protection sheet material of the protection member disposed on one side of the permeable sheet material, and the protection sheet material of the permeable member disposed on the other side of the permeable sheet material.

A method for producing a ventilation member according to the present invention includes: a permeable member producing step of producing a permeable member by mounting a peripheral edge portion of a permeable sheet material, which selectively allows a certain gas to pass therethrough, to a first frame body; a protection member producing step of producing a protection member by mounting a peripheral edge portion of a protection sheet material to a second frame body; and a mounting step of mounting the permeable member and the protection member integrally with each other by coupling the first frame body and the second frame body to each other, thereby disposing the protection sheet material of the protection member on at least one side of the permeable sheet material.

The method for producing the ventilation member according to the present invention may further include a step of mounting the peripheral edge portion of the protection sheet material to the first frame body to dispose the protection sheet material on the other side of the permeable sheet material in the permeable member producing step.

A ventilation container according to the present invention is a ventilation container including the ventilation member, a container body, and a ventilation part that communicates between inside and outside of the container body to enable ventilation, wherein the ventilation member is disposed at the ventilation part to allow the permeable sheet material and the protection sheet material to close the ventilation passage of the ventilation part.

In the ventilation container of the present invention, the ventilation member may be disposed to have the protection sheet material of the protection member disposed at a position closer to the inside of the container body than the permeable sheet material is.

According to the present invention, it is possible to provide a ventilation member that can allow the permeable sheet material and the protection sheet material to be subjected to performance inspection independently of each other during production process, and can be easily disposed in a container.

The present invention makes it possible to provide a method for producing a ventilation member that can allow the permeable sheet material and the protection sheet material to be subjected to performance inspection independently of each other during production process, and can be easily disposed in a container.

Further, the present invention makes it possible to provide a ventilation container that can allow the permeable sheet material and the protection sheet material to be subjected to performance inspection independently of each other during production process, and can allow the container to be easily disposed in the container.

### DESCRPTION OF REFERENCE NUMERALS

- 10:: Ventilation member
- 1:: Permeable member
- 11:: Permeable sheet material
- 12:: First frame body
- 2:: Protection member
- 21:: Protection sheet material
- 22:: Second frame body
- 3:: Outer frame body
- 100:: Ventilation container

## Claims

1. A ventilation member comprising:
a permeable member that includes a permeable sheet material that selectively allows a certain gas to pass therethrough, and a first frame body that supports a peripheral edge portion of the permeable sheet material; and
a protection member that includes a protection sheet material, and a second frame body that supports a peripheral edge portion of the protection sheet material,
wherein the permeable member and the protection member are integrally configured by the first frame body and the second frame body coupled to each other, and
wherein the protection sheet material is disposed on at least one side of the permeable sheet material.

2. The ventilation member according to claim 1 further comprising an outer frame body that is disposed outside the permeable member and the protection member.

3. The ventilation member according to claim 1 or 2, the permeable sheet material includes a hydrogen permeable metal layer that selectively allows hydrogen gas to pass therethrough.

4. The ventilation member according to any one of claims 1 to 3, wherein the protection sheet material includes a porous film.

5. The ventilation member according to any one of claims 1 to 4, wherein a plurality of the protection members are provided, and
wherein the permeable members and the plurality of the protection members are integrally configured to have the protection sheet material disposed on each of the both sides of the permeable sheet material.

6. The ventilation member according to any one of claims 1 to 4, wherein the permeable member includes an additional protection sheet material that is disposed on the other side of the permeable sheet material.

7. The ventilation member according to claim 6, wherein the permeable member and the protection members are integrally configured to have the protection sheet material of the protection member disposed on one side of the permeable sheet material, and the protection sheet material of the permeable member disposed on the other side of the permeable sheet material.

8. A method for producing a ventilation member comprising:
a permeable member producing step of producing a permeable member by mounting a peripheral edge portion of a permeable sheet material, which selectively allows a certain gas to pass therethrough, to a first frame body;
a protection member producing step of producing a protection member by mounting a peripheral edge portion of a protection sheet material to a second frame body; and
- a mounting step of mounting the permeable member and the protection member integrally with each other by coupling the first frame body and the second frame body to each other, thereby disposing the protection sheet material of the protection member on at least one side of the permeable sheet material.

9. The method for producing a ventilation member according to claim 8, further include a step of mounting the peripheral edge portion of the protection sheet material to the first frame body to dispose the protection sheet material on the other side of the permeable sheet material in the permeable member producing step.

10. A ventilation container comprising:
the ventilation member according to any one of claims 1 to 7;
a container body; and
a ventilation part that communicates between inside and outside of the container body to enable ventilation,
wherein the ventilation member is disposed at the ventilation part to allow the permeable sheet material and the protection sheet material to close the ventilation passage of the ventilation part.

11. The ventilation container according to claim 10, wherein the ventilation member is disposed to have the protection sheet material of the protection member disposed at a position closer to the inside of the container body than the permeable sheet material is.
